# EUROPEAN PATENT APPLICATION

(11) **EP 2 548 640 A1**
(43) Date of publication of application: **23.01.2013**
(21) Application number: 11756164.7
(22) Date of filing: 10.03.2011
(51) Int. Cl.: B01J 23/28, B01D 53/54, B01D 53/86, B01J 20/06, B01J 23/22, B01J 23/30

(54) **METHOD AND DEVICE FOR TREATING GAS DISCHARGED FROM A CARBON DIOXIDE RECOVERY DEVICE**

(30) Priority: 15.03.2010 JP 2010057017
(71) Applicant: Babcock-Hitachi Kabushiki Kaisha, Chiyoda-ku Tokyo 101-0021 (JP)
(72) Inventor: FUJISAWA Masatoshi, Kure-shi Hiroshima 737-0029 (JP); MORITA Isato, Kure-shi Hiroshima 737-0029 (JP); KATO Yasuyoshi, Kure-shi Hiroshima 737-0029 (JP)
(74) Representative: Jenkins, Peter David
(86) International application number: PCT/JP2011/055596
(87) International publication number: WO 2011/114978

(57) **Abstract**

An object of the present invention is to provide a method and a device, which can suppress poisoning due to CO and efficiently remove a low concentration of amines contained in a gas discharged from a CO₂ recovery device that uses various absorbing liquids of CO₂ even at low temperature. A dischraged gas treatment method for removing amines as absorbent contained in a gas discharged from a CO₂ removal device, in which the CO₂ removal device has used the amines, the method comprising alternatively performing the step of passing the discharged gas through a catalyst-packed bed which is packed with a catalyst composed of titanium oxide and an oxide of vanadium (V) or titanium oxide, an oxide of vanadium and an oxide of molybdenum (Mo) or tungsten (W), to adsorb and remove the amines contained in the discharged gas; and the step of passing heated air through the catalyst-packed bed wherein the amines are adsorbed thereon to heat the catalyst, and at the same time performing elimination and oxidative decomposition of the adsorbed amines.

## Description

### TECHNICAL FIELD

The present invention relates to a method for treating a gas discharged from a CO₂ recovery device for removing carbon dioxide (CO₂) contained in the gas using an amine absorbing liquid, and particularly to a method and a device for efficiently purifying amines at lower temperature wherein the amines are vaporized in a discharged gas.

### BACKGROUND ART

Environmental destruction due to global warming is a serious problem on a global scale, and it is imperative for countries to reduce emissions of CO₂ which exerts a large adverse influence on the greenhouse effect. In particular, CO₂ emissions from a thermal power house account for about 1/3 of the entire emissions, and thus many works have been carried out on technology of recovering and removing CO₂ from an exhaust gas, together with the development of a high efficiency boiler. Among CO₂ recovery technologies, technology of absorbing and recovering CO₂ using various absorbing liquids is easy to apply for existing facilities, and thus it is expected that the technology may be mainstream in the future.

General outline of a recovery system of CO₂ in an exhaust gas using a CO₂ absorbing liquid is described with reference to Fig. 4 (for example, Patent Literature 1). An exhaust gas from a boiler 9 and the like is treated in a denitration device 10, an air preheater 11, an air dust precipitator 12 and a desulfurization device 13, and then brought into contact with an aqueous solution containing amines (hereinafter referred to as an amine absorbing liquid) such as monoethanolamine, diethanolamine, triethanolamine, dimethylethanolamine and the like in a CO₂ absorption device 1, where CO₂ contained in the exhaust gas is absorbed and removed while the treated gas is released into the atmosphere through a funnel 6. In contrast, the absorbing liquid containing CO₂ absorbed therein is introduced into a regeneration column 2, where the absorbed CO₂ is released by heating, the regenerated liquid is returned to the CO₂ absorption device 1 and then used again as the absorbing liquid. The above method has a large merit in that it is possible to easily make practical use of a device by a simple compound used as an absorbent, and a simple operation of absorption, regeneration and releasing.

There is also known, as a method for treating amines contained in a discharged gas, technology in which amines are decomposed by combustion at high temperature when high concentration of amines are contained, while amines are adsorbed and removed by an adsorbent when low concentration of amines are contained (Patent Literature 2).

### PRIOR ART LITERATURES

### PATENT LITERATURES

Patent Literature 1 : JP H05-123535 A
Patent Literature 2 : JP 2009-125692 A

### SUMMARY OF THE INVENTION

### PROBLEMS TO BE RESOLVED BY THE INVENTION

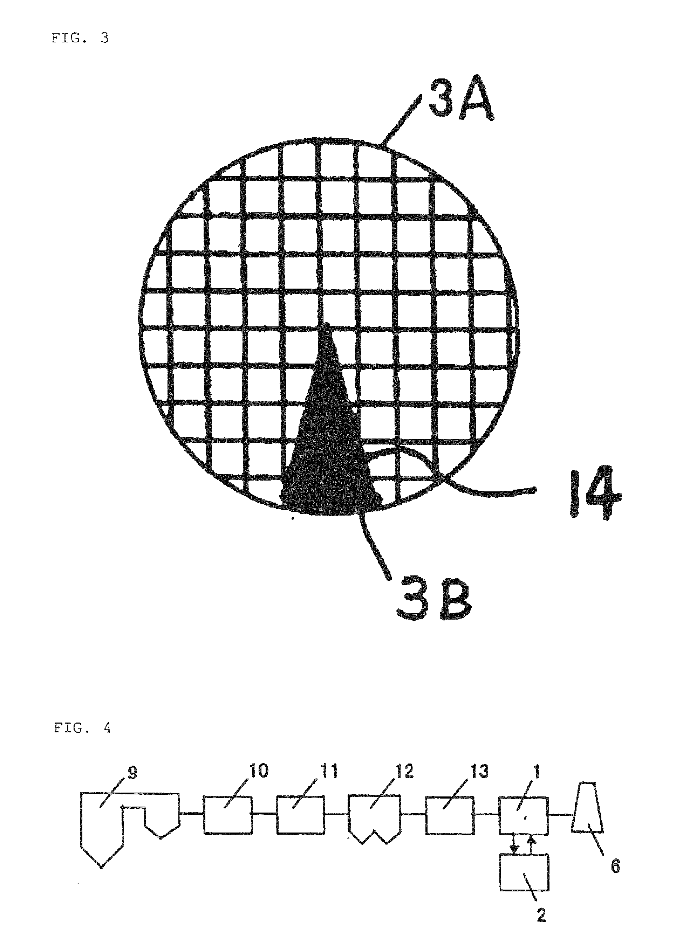

However, in the method shown in Fig. 4, careful consideration was not given to the point that amines corresponding to equilibrium vapor pressure thereof are vaporized in a gas to be treated in the step of a CO₂ absorption operation, and the amines are released into the atmosphere. Low level of amines are contained in a discharged gas and are released, because of low vapor pressure of amines. Since there are quite a few amines with causes for concern of carcinogenicity, it is not desired to directly release amines into the atmosphere.

Therefore, technology for removing amines contained in a discharged gas is necessary. However, a method for combustion at high temperature leads to an increase in CO₂ emissions, and also a large amount of an adsorbent is required for just absorbing and removing using an adsorbent, and thus it is impossible to say it is economically or practically desirable.

There is also generally known a method in which a low concentration of an organic substance contained in a gas is adsorbed and removed using an adsorbent. According to this method, since adsorption power decreases as the amount of adsorption increases, it is necessary to replace the adsorbent after a given amount of adsorption. Therefore, the amount of the adsorbent used is decreased by using in combination with a method in which an adsorbent is regenerated by eliminating an organic substance adsorbed by heated air. There are known, as the method for purifying a gas containing an organic substance desorbed from an adsorbent by heated air, a method in which an organic substance is combusted and decomposed at high temperature, or a method in which an organic substance is subjected to oxidative decomposition using an oxidation catalyst typified by a noble metal catalyst. Use of the oxidation catalyst enables oxidative decomposition of the organic substance without raising a temperature to high temperature, and thus enabling a reduction in fuel required for heating and a reduction in amount of CO₂ generated. It has been found that when a noble metal catalyst is used, CO as an intermediate product is strongly adsorbed at low temperature and undergoes poisoning, and thus the noble metal catalyst is not suited for a treatment at low temperature.

An object of the present invention is to provide a method and a device for efficiently removing a low concentration of amines in a gas discharged from a CO₂ recovery device using amine absorbing liquids and suppressing poisoning due to CO even at low temperature.

### MEANS FOR SOLVING THE PROBLEMS

The inventors have earnestly proceeded with studies in order to achieve the above object and searched a catalyst component which is less likely to cause poisoning due to CO and can efficiently decompose it the temperature range from low temperature. As a result, they have found that a catalyst composed of titanium oxide and an oxide of vanadium (V), titanium oxide and an oxide of vanadium and molybdenum (Mo), or titanium oxide, an oxide of vanadium and tungsten (W) exhibits high activity. Namely, inventions to be claimed in the present application are as follows.
(1) A discharged gas treatment method for removing amines wherein the amines are contained in a gas discharged from a CO₂ removal device and the CO₂ removal device has used the amines as an absorbent of carbon dioxide (CO₂),
   the method comprising alternatively performing
   the step of passing the discharged gas through a catalyst-packed bed which is packed with a catalyst composed of titanium oxide and an oxide of vanadium (V) or titanium oxide, an oxide of vanadium and an oxide of molybdenum (Mo) or tungsten (W) to adsorb and remove the amines contained in the discharged gas; and
   the step of passing heated air through the catalyst-packed bed wherein the amines adsorbed thereon to heat the catalyst, and at the same time performing elimination and oxidative decomposition of adsorbed amines.
(2) The discharged gas treating method according to (1), in which the heated air is an exhaust gas from a combustion furnace such as a boiler.
(3) A discharged gas treatment device for removing amines in which the amines are contained in a gas discharged from a CO₂ removal device and the CO₂ removal device has used the amines as an absorbent of carbon dioxide (CO₂),
   the discharged gas treatment device comprising
   a catalyst-packed bed which is packed with a catalyst composed of titanium oxide and an oxide of vanadium (V) or titanium oxide, an oxide of vanadium and an oxide of molybdenum (Mo) or tungsten (W), wherein the discharged gas is passed through the catalyst-packed bed to adsorb and remove the amines contained in the discharged gas, the catalyst-packed bed is formed in a plurality of reactors provided in parallel in a direction of the discharged gas flow, or formed in a plurality of reaction chambers provided in parallel by partitioning the interior of a reactor in a direction of the discharged gas flow;
   a piping system configured to respectively supply the discharged gas containing amines and heated air for elimination and decomposition of the adsorbed amines comprised in the catalyst-packed bed to the plurality of reactors or reaction chambers; and
   a switching unit configured to switch the piping system so as to supply the exhaust gas and heated air alternately to the piping system.
(4) the discharged gas treatment device according to (3), in which the reaction chambers are formed by radially partitioning a cylindrical reaction container around its central axis along a flow direction of the discharged gas; and the switching unit is configured to rotated the cylindrical reaction container around its central axis to alternatively pass the discharged gas containing amines and the heated air through the reaction chambers with the piping system.

A catalyst used in the present invention can be produced at low costs since no noble metal is used, and also has high activity with respect to the removal of amines even at low temperature, for example, 120°C. Use of this catalyst as an adsorbent enables adsorption and removal of a low concentration of amines contained in a discharged gas from a CO₂ recovery device in a lower temperature range. Passing of heated air at low temperature enables elimination of amines adsorbed on a catalyst, and at the same time enables oxidative decomposition of the amines and thus enabling purification.

As the heated air, utilization of an exhaust gas from a boiler enables omission of additional facilities such as a heater. After purification by decomposition of amines, the exhaust gas can be returned to an original exhaust gas flow before the CO₂ absorption device to recover CO₂ generated by the decomposition of amines in the CO₂ absorption device.

### ADVANTAGEOUS EFFECTS OF THE INVENTION

According to the present invention, it is possible to efficiently adsorb and remove harmful amines contained in a discharged gas generated in a CO₂ removal device by a specific catalyst-packed bed, and to purify the adsorbed amines by decomposition at low temperature by passing heated air through the catalyst-packed bed, and thus enabling the removal of amines with remarkably high efficiency.

### BRIEF DESCRIPTION OF THE DRAWINGS

Fig. 1 is an explanatory diagram of a device system, illustrating Example of the present invention.
Fig. 2 is an explanatory diagram of a device system, illustrating Example of the present invention.
Fig. 3 is a cross-sectional view taken along lines III-III of Fig. 2, in the direction of the arrows.
Fig. 4 is an explanatory diagram illustrating a schema of a CO₂ recovery system of interest to the present invention.

### EMBODIMENTS FOR CARRYING OUT THE INVENTION

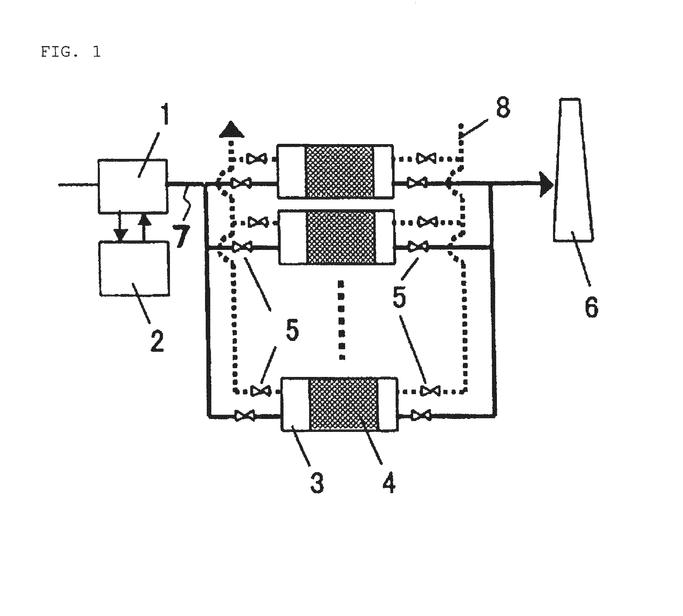

Arrangement example of a device for carrying out the present invention and general outline of the device are described with reference to Fig. 1 to Fig. 3. A device shown in Fig. 1 comprises a CO₂ absorption device 1 which brings a CO₂-containing gas into contact with an absorbing liquid containing amines thereby to recover CO₂; a stripping column 2 which eliminates CO₂ from the absorbing liquid containing CO₂ absorbed therein; a reactor 3, packed with a catalyst 4 of the present invention, for decomposing and removing amines contained in a discharged gas of the CO₂ absorption device 1; and a funnel 6 for releasing the purified gas, which is obtained by removing the amines in the reactor 3, into the atmosphere. A plurality of reactors 3 are provided in parallel, and a discharged gas line 7 from the CO₂ absorption device 1 is branched so as to enable an alternative switch operation, and the branched passage is connected to each reactor 3, the each branched passage having a passage switching valve 5. The reactor 3 is provided with a heated air line 8 (broken line) through which heated air is introduced thereby to eliminate and decompose amines, and a passage switching valve 5.

In such a device, a discharged gas from the CO₂ absorption device 1 is introduced into the plurality of reactors 3 packed with the catalyst 4, amines contained in the gas are adsorbed and removed by coming into contact with the packed catalyst 4, and then the gas is released into the atmosphere through the funnel 6. Furthermore, introduction of a discharged gas into the reactor 3 is stopped by a passage switching valve 5 and heated air is introduced through a line 8. This enables elimination and decomposition of amines adsorbed on the catalyst, and maintaining high adsorption power of the reactor 3. After purification of adsorbed amines, it is possible to adsorb and remove amines by switching a switching valve 5 and reintroducing a discharged gas into the reactor 3.

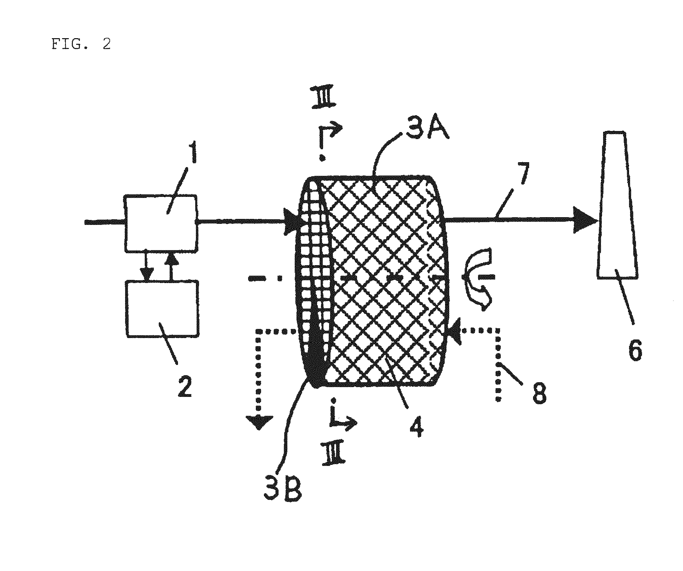

Fig. 2 is configured such that a plurality of reaction chambers 3A and 3B are provided by radially partitioning a cylindrical vessel by partition wall 14 in place of a plurality of reactors 3 disposed in parallel in Fig. 1; the reaction vessel is divided so as to introduce heated air 8 in a specific reaction chamber 3B; and also a cylindrical vessel is rotated around a central axis thereof, enabling alternatively carrying out introduction of a discharged gas into the reaction chamber 3A and introduction of a heated air into the reaction chamber 3B. The discharged gas from the CO₂ absorption device 1 is introduced to the catalyst 4 packed in the cylindrical reactor 3 to adsorb and remove amines contained in the gas by coming into contact with the catalyst, and then the gas is released into the atmosphere through the funnel 6. The cylindrical reactor 3 is rotated around the center of a circle as an axis, and thus enabling alternatively adsorption of amines by introduction of a discharged gas in a reaction chamber 3A and enabling elimination and decomposition by heated air in a reaction chamber 3B, and also maintaining high adsorption power and amine decomposition performance of the reactor 3.

The shape of a catalyst packed in the reaction chamber in the present invention is not specifically defined, such as a plate shape, a honeycomb shape, a granular shape and the like. In the case as shown in Fig. 2, a plate or honeycomb shape, which causes less leakage during switching of a gas passage, gives satisfactory results.

### EXAMPLES

### Example 1

Water was added to 1.5 kg of a titanium oxide powder having specific surface area of 300 m²/g and SO₄ content of 3% by weight, 188 g of ammonium molybdate (NH₄₆·Mo7O₂₄·4H₂O), 175 g of ammonium metavanadate (NH₄VO₃) and 226 g of oxalicacid (H₂C₂O₄·2H₂O), and the mixture was kneaded into a paste having a moisture content of 34% by weight. Then, 300 g of inorganic fibers made of silica-alumina was kneaded together with the paste to be uniformly dispersed in the paste. The paste thus obtained was placed on a 0.2 mm thick metal lath base material made of SUS430, and passing it through between a pair of upper and lower roller presses, a catalyst paste was applied so as to fill the interior of through holes of the metal lath to obtain a 0.8 mm thick sheet. The obtained sheet was air-dried and fired at 500°C for 2 hours to prepare a decomposition catalyst 1 for amines.

### Example 2

The same operation was carried out, except that ammonium molybdate in Example 1 was changed to 268 g of ammonium metatungstate (NH₄₆W₁₂O₄0·xH₂O, 92% in terms of WO₃), to prepare a decomposition catalyst 2 for amines.

### Example 3

The same operation was carried out, except that ammonium molybdate in Example 1 was not added, to prepare a decomposition catalyst 3 for amines.

### Comparative Example 1

An operation of immersing a cordierite honeycomb carrier having diameter of 10 cm length of 50 L, and 300 cells/square inch (300 cpsi) in a titania sol being 15 % by weight in a TiO₂ concentration, followed by drying were repeated three times, and then firing was carried out at 350°C for 2 hours to obtain a catalyst carrier comprising 90 g/L of TiO₂ supported thereon. The catalyst carrier thus obtained was immersed in a dinitrodiammineplatinum solution thereby to support 2 g/L of platinum as Pt thereon, followed by drying and further firing at 600°C for 2 hours to prepare a Pt supported catalyst.

Using the catalysts prepared in Examples 1 to 3 and Comparative Example 1, each catalyst was immersed in 5% by weight monoethanolamine so as to simulate a state where amines are adsorbed and removed by bringing into contact with a discharged gas. A gas flow type reactor was packed with this catalyst and a gas stimulating heated air was passed through the reactor under the conditions in Table 1, and then decomposition of amines was confirmed by measuring CO₂ and CO generated. The results are shown in Table 2.

As is apparent from Table 2, elimination and decomposition of amines proceed by heating the catalyst comprising amines adsorbed thereon, and decomposition of amines proceeds at such a low temperature as 120°C with high efficiency in the Examples. As a result, use of a catalyst composed of titanium oxide and an oxide of vanadium (V), or a catalyst composed of titanium oxide and vanadium, and an oxide of molybdenum (Mo) or tungsten (W) added thereto enables elimination and decomposition of amines at lower temperature, and thus enabling drastic reduction in energy of raising to the temperature needed for decomposition of amines. Repeated adsorption at low temperature and decomposition due to heating enables efficient removal of amines using a small amount of a catalyst.

**[Table 1]**

| Amount of gas | | 3 L/min |
|---|---|---|
| Amount of catalyst packed | | Three pieces of catalysts each measuring 20 x 100 mm (Honeycomb catalyst has the same external surface area) |
| Area velocity | | 6 m/h |
| Gas composition | O₂ | 3% |
| | N₂ | Balance |
| Rate of temperature rise | | 2°C/min |

**[Table 2]**

| Catalyst | Amount of CO₂ + CO generated (ppm) | | | |
|---|---|---|---|---|
| | 120°C | 150°C | 175°C | 200°C |
| Ex. 1 | 2 | 149 | 422 | 417 |
| Ex. 2 | 3 | 129 | 412 | 430 |
| Ex. 3 | 0 | 95 | 308 | 360 |
| Comp. Ex. 1 | 4 | 27 | 31 | 93 |

### EXPLANATION OF SYMBOLS

- 1:: CO₂ absorption device
- 2:: CO₂ stripping column
- 3:: reactor
- 3A, 3B:: reaction chamber
- 4:: catalyst
- 5:: passage switching valve
- 6:: funnel
- 7:: discharged gas line from CO₂ absorption device
- 8:: heated air line
- 9:: boiler
- 10:: denitration device
- 11:: air preheater
- 12:: electrostatic dust precipitator
- 13:: desulfurization device
- 14:: partition wall

## Claims

1. A discharged gas treatment method for removing amines wherein the amines are contained in a gas discharged from a CO₂ removal device and the CO₂ removal device has used the amines as an absorbent of carbon dioxide (CO₂), the method comprising alternatively performing
the step of passing the discharged gas through a catalyst-packed bed which is packed with a catalyst composed of titanium oxide and an oxide of vanadium (V) or titanium oxide, an oxide of vanadium, and an oxide of molybdenum (Mo) or tungsten (W) to adsorb and remove the amines contained in the discharged gas; and
the step of passing heated air through the catalyst-packed bed wherein the amines are adsorbed thereon to heat the catalyst, and at the same time performing elimination and oxidative decomposition of the adsorbed amines.

2. The discharged gas treating method according to claim 1, wherein the heated air is an exhaust gas from a combustion furnace such as a boiler.

3. A discharged gas treatment device for removing amines in which the amines are contained in a gas discharged from a CO₂ removal device and the CO₂ removal device has used the amines as an absorbent of carbon dioxide (CO₂), the discharged gas treatment device comprising
a catalyst-packed bed which is packed with a catalyst composed of titanium oxide and an oxide of vanadium (V) or titanium oxide, an oxide of vanadium and an oxide of molybdenum (Mo) or tungsten (W), wherein the discharged gas is passed through the catalyst-packed bed to adsorb and remove the amines contained in the discharged gas, the catalyst-packed bed is formed in a plurality of reactors provided in parallel in a direction of the discharged gas flow, or formed in a plurality of reaction chambers provided in parallel by partitioning the interior of a reactor in a direction of the discharged gas flow;
a piping system configured to respectively supply the discharged gas containing amines and heated air for elimination and decomposition of the adsorbed amines comprised in the catalyst-packed bed to the plurality of reactors or reaction chambers; and
a switching unit configured to switch the piping system so as to supply the exhaust gas and heated air alternately to the piping system.

4. The discharged gas treatment device according to claim 3, wherein the reaction chambers are formed by radially partitioning a cylindrical reaction container around its central axis along a direction of the discharged gas flow; and the switching unit is configured to rotate the cylindrical reaction container around its central axis to alternatively pass the discharged gas containing amines and the heated air through the reaction chambers with the piping system.
